# EUROPÄISCHE PATENTANMELDUNG

(11) **EP 0 978 661 A2**
(43) Veröffentlichungstag der Anmeldung: **09.02.2000**
(21) Anmeldenummer: 99113614.4
(22) Anmeldetag: 12.07.1999
(51) Int. Cl.: F16B 5/07

(54) **Kraftschluss-Verbindung**

(30) Priorität: 06.08.1998 DE 19835560
(71) Anmelder: Volkswagen Aktiengesellschaft, 38436 Wolfsburg (DE)
(72) Erfinder: Morsch, Klaus-Dieter, 38124 Braunschweig (DE)

(57) **Zusammenfassung**

Die Erfindung betrifft eine Kraftschlußverbindung für zwei Teile, die im Abstand zueinander angeordnet und durch Widerlager gestützt sind, mit wenigstens einem zwischen diese gepreßten Kraftschlußelement mit teileseitigen Andruckflächen. Um langgestreckte und/ oder flächige Teile kraftschlüssig fügen zu können, weist das Kraftschlußelement (3) mehrere im Abstand hintereinander ausgebildete und Druckelemente bildende keilförmige Flanken (4) auf, mit denen es gegen mit diesen korrespondierende Vorsprünge (6; 12;14; 20; 22) gepreßt wird, die entweder an wenigstens einem der zu verbindenden Teile (13; 16; 21) oder an einem zweiten zwischen die Teile geschobenen Kraftschlußelement (5; 11) ausgebildet sind.

## Beschreibung

Die Erfindung betrifft eine Kraftschluß-Verbindung, insbesondere zum Fügen zweier langgestreckter Bauteile nach dem Oberbgeriff des Anspruchs 1, vorzugsweise für den Automobilbau.

Es ist bekannt, Bauteile kraftschlüssig miteinander zu verbinden, insbesondere durch eine Schrumpfung des einen Bauteils auf das andere, durch eine Schraub- oder durch eine Keilverbindung. Keilverbindungen werden dadurch erzeugt, daß ein keilförmiges Verbindungselement zwischen die zu verbindenden Bauteile gedrückt oder geschlagen und so eine Preßverbindung hergestellt wird. Der Vorteil einer kraftschlüssigen Verbindung kann darin liegen, daß das Verbindungselement an den Außenseiten der zu verbindenden Teile nicht sichtbar ist, wie das bei einer Schraub- oder auch bei einer Schweißverbindung der Fall ist. Auch kann der Montage- und Demontageaufwand gegenüber den genannten anderen Fügeverfahren reduziert sein.

Insbesondere im Automobilbau gibt es langgestreckte Teile oder großflächige Teile mit langgestreckten Verbindungsstellen, wie Schweller, Kotflügel oder Türaußenverkleidungen, die mit anderen Fahrzeugaufbauteilen verbunden werden müssen.

Es ist Aufgabe der Erfindung, eine Kraftschluß-Verbindung nach dem Oberbegriff des Anspruchs 1 zu schaffen, mit der langgestreckte und/ oder flächige Teile gefügt werden können.

Diese Aufgabe wird bei einer Kraftschluß-Verbindung nach dem Oberbegriff des Anspruchs 1 durch dessen kennzeichnende Merkmale gelöst.

Die erfindungsgemäße Kraftschluß-Verbindung für zwei miteinander zu verbindende Teile mit einander zugewandten Verbindungsflächen und mit wenigstens einem zwischen diese preßbaren Kraftschlußelement mit teileseitigen Andruckflächen besteht darin, daß das Kraftschlußelement mehrere im Abstand hintereinander ausgebildete und Druckelemente bildende keilförmige Flanken aufweist, mit denen es gegen mit diesen korrespondierende Vorsprünge gedrückt wird, die entweder an wenigstens einem der zu verbindenden Teile oder an einem zweiten zwischen die Teile geschobenen Kraftschlußelement ausgebildet sind.

Mit dieser Kraftschluß-Verbindung können zwei Bauteile mit langgestreckten geraden Verbindungsflächen, beispielsweise ein Schweller oder ein Kotflügel und ein Seitenteil bei einem Kraftfahrzeug, miteinander verbunden werden. Insbesondere sind sogenannte verdeckte Verbindungen möglich bei denen die Verbindungsstellen von außen nicht zugänglich sind oder bei denen die Verbindungsstellen oder -nähte nicht sichbar sein sollen, beispielsweise die Verbindung zweier Profile.

Dabei kann das Kraftschlußelement mit einer Spannschraube in Wirkverbindung stehen, die den Vorschub bewirkt und das Kraftschlußelement mit seinen keilförmigen Flanken gegen die Vorsprünge des einen Teils zieht und dadurch den für eine stabile Verbindung erforderlichen Anpreßdruck und damit den Kraftschluß erzeugt. Für einen dauerhaften Kraftschluß ist es erforderlich, daß das Kraftschlußelement in seiner Füge- bzw. Kraftschlußposition fixiert ist.

Für die Wirkverbindung mit einer Spannschraube kann es in Vorschubrichtung an seiner Front- bzw. Stirnseite einen Flansch oder ein andersartig gestaltetes Lager für die Spannschraube aufweisen, die ihr zweites Widerlager an dem jeweils anderen Teil oder an einem weiteren Bauteil hat.

Das Kraftschlußelement kann bandförmig ausgebildet sein, wobei die Flanken in das Bandmaterial eingeformt sein können. Mit dieser Ausführungsform ist ein durch seine Gestaltung begrenzt elastisches Kraftschlußelement gegeben, durch das auch Fertigungstoleranzabweichungen aufgenommen werden können und sichergestellt ist, daß jede Flanke einen Beitrag zum Kraftschluß erbringt.

Eine andere Ausführungsform isrt aus Kunststoff geformt. Bei dieser sind die Flanken an angeformten Keilen ausgebildet. Hier sind eine Mindestelastizität zum Ausgleich von Fertigungstolerazabweichungen durch das Material und die erforderliche Stabilität zur Erzeugung des Anpreßdruckes durch die aus vollem Material angeformten Keile gegeben.

Die an einem der Teile oder an einem zweiten zwischen die Teile geschobenen Kraftschlußelement ausgebildeten Vorsprünge können durch Sicken, gegebenenfalls auch durch keilförmig ausgebildete Sicken, oder im einfachen Fall durch punktförmige Erhebungen gebildet sein.

Die Kraftschluß-Verbindung zwischen zwei in Fügeposition befindlichen Teilen wird nun dadurch erzeugt, daß ein erfindungsgemäßes Kraftschlußelement, dessen keilförmige Flanken mit der Position der Vorsprünge eines der Teile korrespondieren, oder daß zwei Kraftschlußelemente mit einander zugewandten und miteinander korrespondierenden Flanken und Vorsprüngen in den zwischen den lagefixierten Teilen gebildeten Spalt entweder in Längsrichtung oder - je nach der Gegebenheit - quer zu diesem eingeschoben wird bzw. werden. Danach wird das die Flanken aufweisende Kraftschußelement gegen die Vorsprünge gedrückt und kann nun, vorzugsweise mit einer Spannschraube in Wirkverbindung gebracht, durch eine weitere Zug- oder Druckausübung auf dieses bei Andrücken der Teile an deren Widerlager den gewünschten stabilen Kraftschluß herstellen. Für eine dauerhafte Kraftschluß-Verbindung ist es zweckmäßig, das in der Füge- bzw. Kraftschlußposition zwischen den Teilen befindliche Kraftschlußelement zu fixieren, insbesondere mit der Spannschraube. Zwischen zwei Teilen mit glatten Andruckflächen wird die Kraftschluß-Verbindung dadurch hergestellt, daß die beiden Kraftschlußelemente mit miteinander korrespondierenden Flanken und Vorsprüngen zwischen die Teile gebracht und relativ zueinander verschoben werden.

Die Erfindung wird nachstehend anhand von Ausführungsbeipielen erläutert. In der zugehörigen Zeichnung zeigen schematisch:
Fig. 1: eine Kraftschluß-Verbindung mit zwei Kraftschlußelementen,
Fig. 2: eine andere Ausführung einer derartigen Verbindung,
Fig. 3: eine Kraftschluß-Verbindung mit einem Kraftschlußelement,
Fig. 4: ein Kraftschlußelement,
Fig. 5: eine Verbindungsanordnung zweier Teile und
Fig. 6: die Verbindung eines Schwellers mit einem Seitenteil.

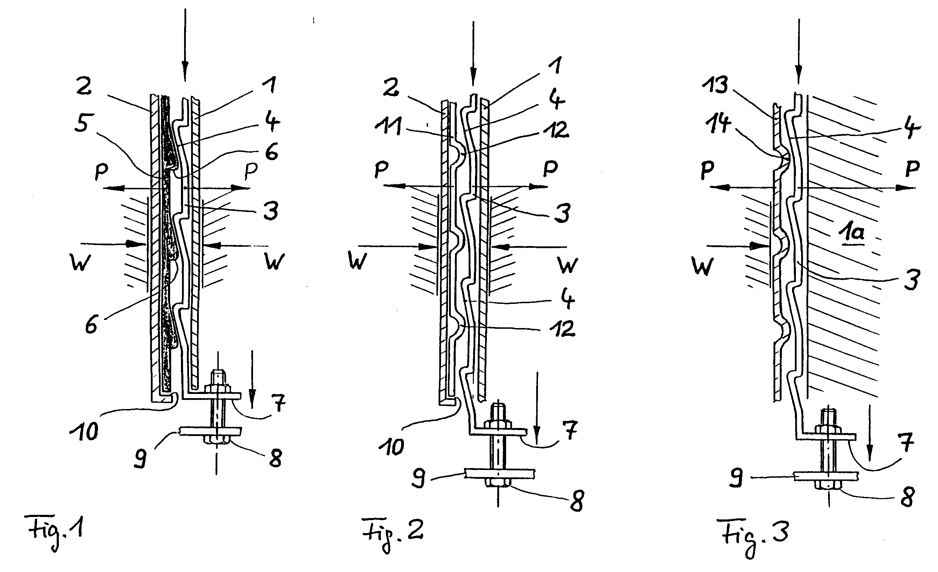

In Fig. 1 ist eine erfindungsgemäße Kraftschluß-Verbindung mit zwei Bauteilen 1 und 2 dargestellt, die im Abstand zueinander angeordnet und durch angedeutete Widerlager W gestützt oder, wie in Fig. 5 dargestellt, durch ihre Gestaltung in einem Maximalabstand zueinander arretiert sind. In den zwischen den Bauteilen 1 und 2 gebildeten Spalt ist ein bandförmiges Kraftschlußelement 3 aus Stahl mit keilförmig ausgebildeten Flanken 4 und ein zweites Kraftschlußelement 5 mit keilförmig angeformten Vorsprüngen 6 aus Kunststoff geschoben. Das Kraftschlußelement 3 weist eine flanschartige Abwinklung 7 für eine Spannschraube 8 auf, die ein ortsfestes Widerlager 9 hat. Das Kraftschlußelement 5 ist am Bauteil 2 durch eine Schulter 10 arretiert.

Wird die Spannschraube 8 angezogen, wird das Kraftschlußelement 3 in Pfeilrichtung nach unten bewegt. Dabei gelangen die Flanken 4 mit den Vorsprüngen 6 in Eingriff, und es entsteht eine Kraftkomponente P quer zum Spalt, die zum Kraftschluß zwischen den durch die Widerlager W gestützten Teilen 1 und 2 und den Kraftschlußelementen 3 und 5 führt, durch den die Teile 1 und 2 kraftschlüssig miteinander verbunden werden.

Fig. 2 zeigt die prinzipiell gleiche Anordnung, jedoch mit einem zweiten Kraftschlußelement 11, bei dem die Vorsprünge durch Sicken 12 gebildet sind, die mit den Flanken 4 des Kraftschlußelementes 3 korrespondieren.

In Fig. 3 ist eine erfindungsgemäße Kraftschluß-Verbindung dargestellt, bei der ein Bauteil 13 mit durch Sicken 14 gebildeten Vorsprüngen versehen ist, die mit den Flanken 4 des Kraftschlußelementes 3 korrespondieren. Bei dieser Anordnung wird der Kraftschluß zwischen den durch Widerlager gestützten Teilen 13 und 1a und dem Kraftschlußelement 3 hergestellt, indem dessen Flanken 4, durch die Spannschraube 8 in Pfeilrichtung gezogen, gegen die Sicken 14 des (Bau-)Teils 13 gedrückt werden.

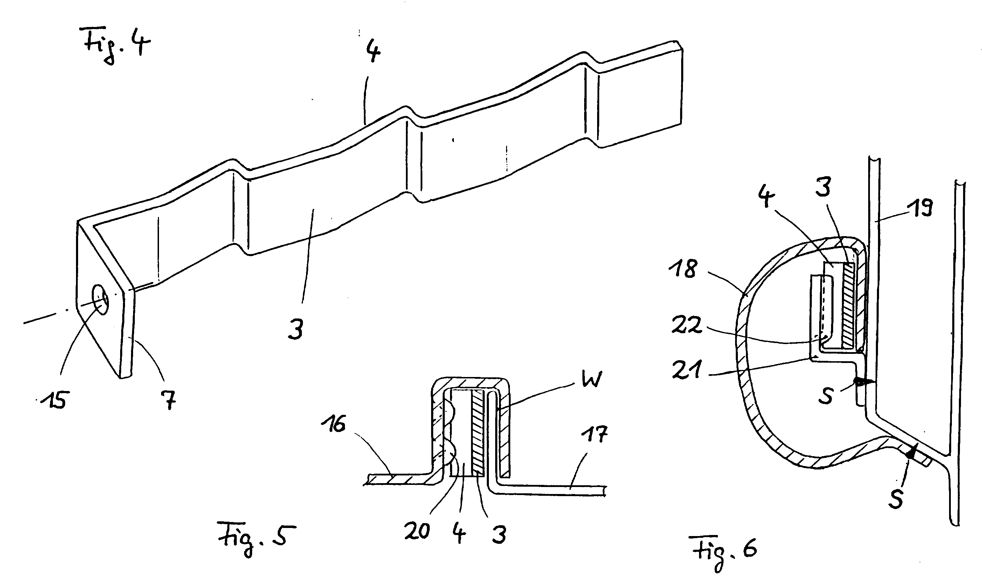

Fig. 4 zeigt ein erfindungsgemäßes Kraftschlußelement 3 in perspektivischer Darstellung. In der flanschartigen Abwinklung 7 ist eine Bohrung 15 für eine Spannschraube 8 angeordnet.

In den Fig. 5 und 6 sind Anordnungen gezeigt, in denen zwei Teile 16 und 17 bzw. 18 und 19 ineinandergehakt angeordnet sind und dadurch ein gegenseitiges Widerlager W haben. Das Teil 16 in Fig. 5 weist punktförmige Vorsprünge 20 auf. Ein Kraftschlußelement 3 ist zwischen den beiden Teilen 16 und 17 angeordnet und führt bei einer Verschiebung, durch die die Flanken 4 mit den Vorsprüngen 20 in Eingriff gelangen und auf diese einen Druck ausüben, zu einer Kraftschluß-Verbindung zwischen den Teilen 16 und 17 und dem Kraftschlußelement 3.

In Fig. 6 ist die Verbindung eines Schwellers 18 mit einem Seitenteil 19 gezeigt. Der als offenes Profil ausgebildete Schweller 18 ist mit einer Profilkante mit dem Seitenteil 19 verschweißt (S) und mit der anderen Profilkante mit diesem kraftschlüssig verbunden. Die Kraftschluß-Verbindungsanordnung entspricht prinzipiell der in Fig. 5 gezeigten, jedoch ist zur Ermöglichung einer Ineinanderhakung der beiden Teile 18 und 19 ein Winkelprofil 21 an das Seitenteil 19 angeschweißt und mit Sicken 22 versehen. Bei einer Verschiebung des Kraftschlußelementes 3 wird die gebördelte Kante des Schwellers 18 kraftschlüssig mit dem Kraftschlußelement 3 und dem Seitenteil 19 verbunden.

## Patentansprüche

1. Kraftschluß- Verbindung für zwei Teile, die im Abstand zueinander angeordnet und durch Widerlager gestützt sind, mit wenigstens einem zwischen diese preßbaren Kraftschlußelement mit teileseitigen Andruckflächen, **dadurch gekennzeichnet,** daß das Kraftschlußelement (3) mehrere im Abstand hintereinander ausgebildete und Druckelemente bildende keilförmige Flanken (4) aufweist, mit denen es gegen mit diesen korrespondierende Vorsprünge (6; 12; 14; 20; 22) gepreßt wird, die entweder an wenigstens einem der zu verbindenden Teile (13; 16; 21) oder an einem zweiten zwischen die Teile (1und 2) geschobenen Kraftschlußelement (5; 11) ausgebildet sind.

2. Kraftschluß-Verbindung nach Anspruch 1, **dadurch gekennzeichnet,** daß das Kraftschlußelement (3) mit einer Spannschraube (8) in Wirkverbindung steht, die seinen Vorschub bewirkt und dieses in seiner Fügeposition fixiert

3. Kraftschluß-Verbindung nach Anspruch 1 oder 2, **dadurch gekennzeichnet,** daß das Kraftschlußelement (3) in Vorschubrichtung frontseitig ein Lager (7) für eine Spannschraube (8) aufweist.

4. Kraftschluß-Verbindung nach einem der vorhergehenden Ansprüche, **dadurch gekennzeichnet,** daß das Kraftschlußelement (3) bandförmig ausgebildet ist, und daß die keilförmigen Flanken (4) durch eine entsprechende Formgebung des Bandmaterials erzeugt sind.

5. Kraftschluß-Verbindung nach Anspruch 1, **dadurch gekennzeichnet,** daß die Vorsprünge durch Sicken (12) gebildet sind.

6. Kraftschluß-Verbindung nach Anspruch 5, **dadurch gekennzeichnet,** daß die Sicken (12) einen keilförmigen Querschnitt aufweisen.

7. Kraftschluß-Verbindung nach Anspruch 1, **dadurch gekennzeichnet,** daß die Vorsprünge in das Bandmaterial eingepreßte punktförmige Erhebungen (20) sind.

8. Kraftschluß-Verbindung nach einem der Ansprüche 1 bis 3, **dadurch gekennzeichnet,** daß das Kraftschlußelement (3) aus Kunststoff besteht und die Flanken (4) aus Vollmaterial angeformt sind.
